# FASCICULE DE BREVET EUROPEEN

(11) **EP 3 074 685 B1**
(45) Date de publication et mention de la délivrance du brevet: **28.02.2018**
(21) Numéro de dépôt: 14821716.9
(22) Date de dépôt: 17.11.2014
(51) Int. Cl.: F16L 27/107, F28D 7/02

(54) **PROCÉDÉ DE FIXATION D'UN TUBE A UN CONNECTEUR, ET KIT DE CONNEXION**
VERFAHREN ZUR BEFESTIGUNG EINES ROHRS MIT EINEM VERBINDER UND VERBINDUNGSKIT
METHOD FOR FIXING A TUBE TO A CONNECTOR, AND CONNECTING KIT

(30) Priorité: 27.11.2013 FR 1361704
(43) Date de publication de la demande: 05.10.2016
(73) Titulaire: SNECMA, 75015 Paris (FR)
(72) Inventeur: LE LOUËDEC, Dominique, F-27950 Saint Marcel (FR); DORION, Carine, F-27940 Aubevoye (FR); BUCHER, Bruno, F-27340 Pont de l'Arche (FR); MILLON, Frederick, F-27950 Saint Marcel (FR)
(74) Mandataire: Duflos, Bertrand Guillaume
(86) Numéro de dépôt international: PCT/FR2014/052932
(87) Numéro de publication internationale: WO 2015/079141

(56) Documents cités:
- FR-A1- 2 257 841
- FR-A1- 2 500 572

## Description

L'invention concerne la fixation d'un tube à un raccord pour relier au moins une paire de tubes, dans le cas où l'extrémité du tube doit passer à l'intérieur d'un manchon pour atteindre le raccord. En particulier, l'invention concerne un kit de connexion selon le préambule de la revendication 1 et un procédé de fixation selon le préambule de la revendication 10. FR 2 257 841 divulgue un tel kit de connexion. Un raccord pour relier au moins une paire de tubes désigne ici un équipement comportant un passage interne, éventuellement extrêmement court, ce passage débouchant sur deux parois de l'équipement en deux orifices de raccordement de tube sur lesquels des tubes peuvent être raccordés. Un manchon désigne une pièce présentant au moins un passage interne traversant, apte à recevoir une pièce intérieure de forme allongée. Une forme préférée de manchon est une forme générale de révolution autour d'un passage interne.

Bien que le manchon indiqué précédemment puisse avoir toute fonction (ou ne pas avoir de fonction technique), et notamment une fonction de protection mécanique du raccordement du tube sur le raccord, l'invention concerne plus particulièrement le cas où le manchon est un manchon de support, assurant la fixation du raccord sur une structure par rapport à laquelle la jonction entre les deux tubes doit être maintenue en position fixe, cette structure pouvant être par exemple une cloison que le tube traverse.

De manière connue (voir par exemple le brevet français n°2928436), pour permettre la fixation du tube le raccord pour relier au moins une paire de tubes est formé intégralement avec le manchon. La pièce unique ainsi formée comporte une bride traversée par un passage interne, et qui assure la fonction de raccordement entre les deux tubes, ainsi qu'une portion en forme de manchon, appelée pour simplifier 'le manchon', qui s'étend à partir d'une périphérie de la bride et permet de fixer celle-ci sur une paroi sur laquelle le raccord doit être fixé.

La fixation du tube qui passe à travers le manchon (appelé par la suite 'le premier tube') est faite par dudgeonnage : On introduit le premier tube dans le manchon et on le fait passer à travers le passage interne du raccord, de telle sorte que l'extrémité du tube soit accessible depuis le côté du raccord opposé au premier tube. On déforme alors de manière plastique l'extrémité du tube, de telle sorte que cette extrémité se trouve bloquée de manière étanche dans une gorge prévue à cet effet dans le raccord.

Cependant, un tel mode de fixation oblige à utiliser un manchon dont la longueur n'excède pas la longueur de la portion du premier tube susceptible d'être disposée dans le manchon, puisque le tube doit s'étendre à travers le manchon jusqu'à atteindre pratiquement l'extrémité opposée du passage interne du raccord, pour permettre l'opération de dudgeonnage.

Or, dans certaines configurations, la longueur de la portion de tube susceptible d'être disposée dans le manchon est faible, et par conséquent la longueur du manchon est également faible. Dans certains cas, cela peut être incompatible avec le cahier des charges applicable au manchon.

Un tel cas se produit en particulier au moins dans l'échangeur de chaleur pour moteur-fusée du type divulgué par le brevet cité précédemment.

Cet échangeur est constitué principalement par un tuyau enroulé de manière à former des spires hélicoïdales, appelé serpentin, disposé à l'intérieur d'un tube cylindrique. Une circulation d'hydrogène dans le serpentin permet d'élever la température de l'hydrogène et de le vaporiser.

Les extrémités du serpentin doivent être positionnées de manière fixe par rapport à la paroi du tube cylindrique, et raccordées à des deuxièmes tubes en amont et en aval, pour permettre respectivement l'alimentation et l'évacuation de l'hydrogène.

Dans l'échangeur de chaleur, le serpentin subit des dilatations thermiques considérables, du fait des variations de température très élevées auxquelles il est soumis. Les extrémités du serpentin doivent donc être fixées et maintenues de manière à résister aux efforts induits par ces dilatations et contractations thermiques et/ou à accompagner celles-ci.

Pour éviter que des contraintes trop fortes ne se créent aux extrémités du serpentin, plutôt que de maintenir fixes les extrémités du serpentin quelle que soit la température, la demanderesse a développé le connecteur de maintien présenté dans le brevet cité précédemment. Dans ce connecteur, la portion en forme de manchon présente une certaine élasticité, qui autorise un déplacement limité des extrémités du serpentin et limite ainsi les contraintes subies par celles-ci.

Ce connecteur est agencé de telle sorte qu'une première extrémité du manchon est fixée sur la paroi du tube cylindrique de l'échangeur thermique, alors que l'autre extrémité du manchon est fixée à la portion du connecteur en forme de bride.

Cependant, en raison de la position du serpentin (qui constitue 'le premier tube') à l'intérieur de l'échangeur de chaleur, la longueur de serpentin susceptible de dépasser à l'extérieur du tube cylindrique en passant à travers la cloison de celui-ci pour permettre le raccordement du serpentin en amont et en aval est très faible, à savoir quelques centimètres tout au plus.

Par conséquent, dans le connecteur décrit dans le brevet cité ci-dessus, la portion en forme de manchon ne peut avoir qu'une longueur très faible. Il s'ensuit que la capacité d'amortissement élastique apportée par la portion en forme de manchon est limitée, et peut s'avérer insuffisante pour certaines applications.

Il existe donc un besoin d'un connecteur et d'un procédé de fixation pour raccorder un premier tube à un raccord pour relier au moins une paire de tubes, dans le cas où l'extrémité dudit premier tube passe dans un manchon, qui n'impose pas que la longueur du manchon soit limitée à celle de la portion du premier tube susceptible d'être disposée à l'intérieur du manchon pour y être fixée sur le raccord.

Un objectif de l'invention est par ailleurs de définir un connecteur et d'un procédé de fixation pour raccorder un premier tube à un raccord pour relier au moins une paire de tubes, assurant une fixation qui présente une fiabilité élevée, et dont la qualité puisse être établie par un contrôle effectué après l'opération de fixation.

L'invention vise à répondre à ce besoin et cet objectif en proposant un assemblage comportant un tube et un connecteur, un kit de connexion, et un procédé de fixation permettant de fixer un tube à un raccord pour relier au moins une paire de tubes.

Un premier aspect de l'invention consiste ainsi en un procédé de fixation d'un premier tube à un connecteur, le connecteur permettant de connecter un deuxième tube avec le premier tube, le procédé comprenant les étapes suivantes :
a) on fournit un kit de connexion comportant un manchon ainsi qu'un raccord pour relier au moins une paire de tubes ;
   le raccord, de forme globalement tubulaire, présentant un axe, ainsi qu'un premier et un deuxième orifice pour la fixation des deux tubes ;
   le premier orifice étant aménagé à une première extrémité du raccord et étant orienté suivant l'axe de celui-ci ;
b) on place le raccord dans une première position dans laquelle la première extrémité du raccord dépasse à l'extérieur du manchon par une première extrémité de celui-ci ;
c) on fixe alors de manière étanche le tube au premier orifice du raccord ;
d) on déplace le raccord par rapport au manchon dans une deuxième position, dans laquelle le premier orifice se trouve de préférence à l'intérieur du manchon ; et
e) le raccord étant dans la deuxième position, on fixe le manchon au raccord à distance dudit premier orifice, ladite distance étant supérieure à un diamètre d'un passage interne du raccord, le manchon et le raccord constituant alors conjointement le connecteur.

Dans la définition précédente, une forme globalement tubulaire désigne la forme d'un objet présentant un passage interne dont la longueur est supérieure au diamètre.

Dans le procédé de fixation ainsi défini, le raccord et le manchon sont des pièces distinctes. Plus précisément, il s'agit de deux pièces distinctes fournies à l'étape a), et qui sont ultérieurement fixées l'une à l'autre, au cours de l'étape e) du procédé de fixation, par exemple par soudage. Le manchon et le raccord ne sont donc pas deux portions d'une même pièce formée intégralement.

Le manchon et le raccord peuvent cependant éventuellement être déjà partiellement fixés l'un à l'autre dès l'étape a), dans la mesure où cette fixation partielle n'empêche pas les positionnements relatifs prévus aux étapes b) et d).

Le raccord est un raccord pour relier au moins une paire de tubes. Dans ce but, il présente un passage interne reliant son premier orifice à son deuxième orifice. Le fluide échangé avec un tube fixé au premier orifice du manchon peut donc circuler via ce passage interne jusqu'au deuxième orifice du raccord.

Dans la première position, une partie du raccord se trouve à l'intérieur du manchon.

De préférence, lors de l'étape d), le déplacement du raccord se fait dans un sens tel qu'une partie croissante du raccord passe à l'intérieur du manchon. Cela permet que le manchon, une fois fixé sur le raccord, soit disposé autour d'une partie importante du raccord, voire autour du raccord entier, ainsi qu'éventuellement une partie du tube. Cette disposition permet au manchon éventuellement de réaliser différentes fonctions vis-à-vis du raccord (protection mécanique, thermique, etc...).

L'intérêt de la structure du connecteur avec deux parties fixées l'une à l'autre est le suivant.

Cet agencement permet de fixer d'abord le tube sur le raccord (étape c), puis de fixer le manchon sur le raccord (étape e).

Comme indiqué précédemment, le raccord et le manchon sont deux pièces distinctes prévues pour pouvoir accomplir le déplacement relatif de l'étape d) entre ces deux étapes de fixation.

En première position, la première extrémité du raccord se trouve à l'extérieur du manchon. Avantageusement, dans cette position la fixation du premier tube sur le raccord est plus facile qu'en deuxième position, dans laquelle l'extrémité du premier tube est décalée par rapport à la première position. Dans la deuxième position, l'extrémité du tube peut se trouver dans une position dans laquelle sa fixation sur le premier orifice du raccord est moins facile, voire impossible. Un exemple d'une telle situation est le cas où en deuxième position, le premier orifice se trouve à l'intérieur du manchon.

Le procédé selon l'invention permet donc de réaliser la fixation du premier tube sur le raccord au cours d'une étape (étape c)) de fixation en utilisant un procédé dont la fiabilité est reconnue, et éventuellement de procéder au contrôle de la qualité de cette fixation au cours de l'étape c), avant le déplacement prévu à l'étape d).

Par exemple, pour la fixation du tube sur le premier orifice du raccord, dans un mode de réalisation l'extrémité du tube peut être soudée au raccord, notamment par une soudure orbitale. Une telle soudure peut être réalisée notamment par un robot, de manière extrêmement fiable. Cette soudure peut en outre être contrôlée.

Par ailleurs, dans l'assemblage ainsi obtenu, l'extrémité du premier tube est fixée à la première extrémité du raccord, et le manchon est fixé sur une partie quelconque du raccord.

Il s'ensuit que le raccord peut avoir une forme qui permet l'emploi de manchons de formes et/ou de longueurs très diverses, notamment l'emploi de manchons de grande longueur (suivant leur axe). Grâce à cela, avantageusement la longueur du manchon n'est pas limitée en fonction de la longueur du premier tube susceptible d'être disposée à l'intérieur du manchon.

Cela étant, conformément à l'invention, à l'étape e) le manchon est fixé sur le raccord à une distance du premier orifice supérieure au diamètre du passage interne du raccord. Le raccord joue donc un rôle de prolongateur pour le premier tube. Ainsi, le manchon est fixé non pas au niveau ou au voisinage de l'extrémité du tube, mais à une certaine distance de celle-ci (c'est-à-dire que les parties en contact du manchon et du raccord, qui servent à fixer l'un sur l'autre, sont distantes du premier orifice du raccord). La distance entre la zone de fixation du manchon sur le raccord et le premier orifice du raccord est d'ailleurs de préférence supérieure au double du diamètre du passage interne du raccord.

Du fait de la distance entre la zone de fixation du manchon sur le raccord et le premier orifice du raccord, les contraintes transmises par le manchon au raccord ne sont pas localisées dans le raccord mais au contraire relativement diffuses, ce qui permet de limiter les concentrations de contraintes au voisinage de la première extrémité du raccord.

De plus, cette distance permet que le manchon puisse s'étendre sur une certaine longueur autour du raccord (au moins égale au diamètre du passage intérieur du raccord).

Dans un mode de réalisation préférentiel, le manchon a une fonction de support mécanique. Le procédé comprend alors en outre une étape f) durant laquelle on fixe le manchon sur un support. Ce support a pour fonction le maintien en position du connecteur ; il peut être par exemple constitué par une cloison, un pied, etc.

Dans un mode de réalisation, l'étape b) est réalisée de la manière suivante : le raccord est introduit dans le manchon par une deuxième extrémité du manchon située du côté opposé à la première extrémité de celui-ci, puis placé dans la première position, permettant alors la fixation du tube. Dans ce dernier cas, les déplacements du raccord aux étapes b) et d) se font dans des sens inverses : Le raccord est inséré dans le manchon par la deuxième extrémité et déplacé à l'étape b) de la deuxième vers la première extrémité du manchon ; ensuite à l'étape d) à l'inverse, le raccord est déplacé vers la deuxième extrémité du manchon, afin de permettre la fixation du manchon sur le raccord.

Ce mode opératoire présente l'avantage suivant.

La mise en oeuvre du procédé de fixation conduit à former un connecteur réunissant le manchon et le raccord.

Lorsque le mode opératoire précédent est mis en oeuvre, seule la première extrémité du raccord est amenée à passer à travers première extrémité du manchon. Il n'est donc pas nécessaire que l'ouverture du manchon à sa première extrémité soit nettement supérieure à la dimension de la première extrémité du raccord. Par suite, si la première extrémité du raccord est de faible dimensions, et par exemple a sensiblement le même diamètre extérieur que le premier tube, la première ouverture du manchon peut être de dimension proche de ce diamètre (quoique légèrement supérieure). Cela permet que la première extrémité du manchon soit alors bouchée (presque complètement) par le premier tube lui-même, à l'issue du procédé de fixation. Cela permet donc que la chambre ou le passage intérieur du manchon soit relativement isolé, notamment thermiquement, de l'environnement extérieur situé au voisinage de sa première extrémité. Cette isolation thermique peut constituer une protection thermique de la fixation entre l'extrémité du premier tube et le raccord.

Inversement, aucune limitation de taille n'intervient sur la deuxième extrémité du raccord (du côté opposé au premier tube) ou sur la partie du manchon située du côté opposé au premier tube.

Avantageusement, cela laisse une grande liberté de forme pour la partie du raccord devant être raccordée au deuxième tube, et pour la partie du manchon devant être fixée au raccord.

Selon un deuxième aspect, l'invention comprend également un kit de connexion comportant un manchon, et un raccord pour relier au moins une paire de tubes, dans lequel
le raccord est de forme globalement tubulaire, et présente un axe, ainsi qu'un premier et un deuxième orifice pour la fixation des deux tubes ; Le premier orifice est aménagé à une première extrémité du raccord et est orienté suivant l'axe de celui-ci ;
ladite première extrémité est configurée pour permettre de fixer de manière étanche un tube de ladite paire de tubes au premier orifice du raccord ;
le raccord est apte à coulisser de manière coaxiale au manchon :
depuis une première position, dans laquelle la première extrémité du raccord dépasse à l'extérieur d'une première extrémité du manchon ; et jusqu'à une deuxième position, qui permet la fixation du manchon sur le raccord à distance dudit premier orifice, ladite distance étant supérieure à un diamètre d'un passage interne du raccord.

Le fait que la fixation du manchon sur le raccord soit réalisée à distance du premier orifice du raccord signifie que la fixation ou la liaison entre le manchon et le raccord se trouve au minimum à une certaine distance du premier orifice du raccord ; cette distance minimale étant égale au diamètre du passage interne du raccord.

On comprend que le kit de connexion ainsi défini permet la fixation d'un tube sur le raccord réuni au manchon pour former un connecteur, suivant le procédé de fixation défini précédemment ; de même, le procédé selon l'invention peut être mis en oeuvre avec tout type de kit de connexion présenté dans ce document.

Dans le kit de fixation, le manchon peut notamment avoir une fonction de support. Dans ce cas, dans un mode de réalisation préférentiel le manchon comporte une base présentant une bride de fixation prévue pour la fixation du manchon sur un support. (Le terme 'base' désigne ici simplement une pièce qui permet ou contribue à la fixation du connecteur sur une pièce de structure, par rapport à laquelle la jonction entre les deux tubes doit être maintenue en position).

Dans un mode de réalisation, lorsque le raccord est placé en deuxième position, la bride de fixation se trouve au voisinage de la première extrémité du manchon.

Par ailleurs, le raccord et le manchon peuvent être agencés de telle sorte qu'une fois le premier tube fixé, le passage interne du manchon soit en partie et si possible en grande partie isolé thermiquement de l'atmosphère extérieure au manchon au voisinage de sa première extrémité.

Dans ce but, dans un mode de réalisation la base bouche partiellement la première extrémité du manchon. La base présente ainsi une section de passage de fluide à travers la base plus faible que la section de passage moyenne du manchon (ces sections étant ici des aires, mesurées dans des plans de section perpendiculaires à l'axe du manchon).

La base peut notamment être sensiblement plane et être orientée transversalement par rapport à l'axe du manchon. Dans ces conditions, elle peut par exemple servir à la fixation du connecteur sur une paroi que le tube traverse, en se substituant à une portion de la paroi.

Dans un mode de réalisation comprenant une base telle qu'indiquée ci-dessus, un trou est aménagé dans la base pour le passage du tube, et un diamètre de ce trou est légèrement supérieur à celui du passage interne du raccord. Par 'diamètre légèrement supérieur à' on signifie ici que le diamètre du trou peut être notamment compris entre 1 et 1,5 fois le diamètre du passage interne du raccord.

Dans un mode de réalisation, le manchon présente une deuxième extrémité du côté opposé à la première extrémité ; et parmi les deux extrémités du manchon, seule la deuxième extrémité permet l'introduction du raccord dans le manchon en vue de son positionnement dans la première position. Cela peut être du notamment au fait que la deuxième extrémité présente une surface de passage plus large que la première extrémité. Ce mode de réalisation permet éventuellement d'utiliser un raccord ayant une deuxième extrémité nettement plus large que sa première extrémité.

Cet agencement du manchon et du raccord permet la mise en oeuvre du mode opératoire spécifique présenté précédemment.

Dans un mode de réalisation, le manchon et le raccord sont agencés de telle sorte que le manchon puisse être fixé à la deuxième extrémité du raccord.

Dans un mode de réalisation, par rapport à un axe du raccord, lorsque le raccord est placé en deuxième position, la première extrémité du raccord se trouve à l'intérieur du manchon.

Dans un mode de réalisation, le deuxième orifice du raccord est situé à une deuxième extrémité du raccord, et celle-ci est configurée pour permettre de fixer de manière étanche un deuxième tube de ladite paire de tubes au deuxième orifice du raccord.

Enfin, on notera que l'invention inclut une configuration dans laquelle le raccord comporte plusieurs passages internes, notamment parallèles, pour le passage de plusieurs flux de fluide. Le raccord est alors un raccord pour relier plusieurs paires de tubes. Les différentes caractéristiques techniques énoncées du procédé de fixation et du kit de connexion couvrent également une telle configuration.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique en perspective d'un réchauffeur comprenant deux assemblages selon l'invention.
- la figure 2 est une coupe d'un assemblage selon l'invention ; et
- la figure 3 est une coupe d'un connecteur selon l'invention, en cours de fixation sur un tube pour constituer un assemblage tel que celui de la figure 2.

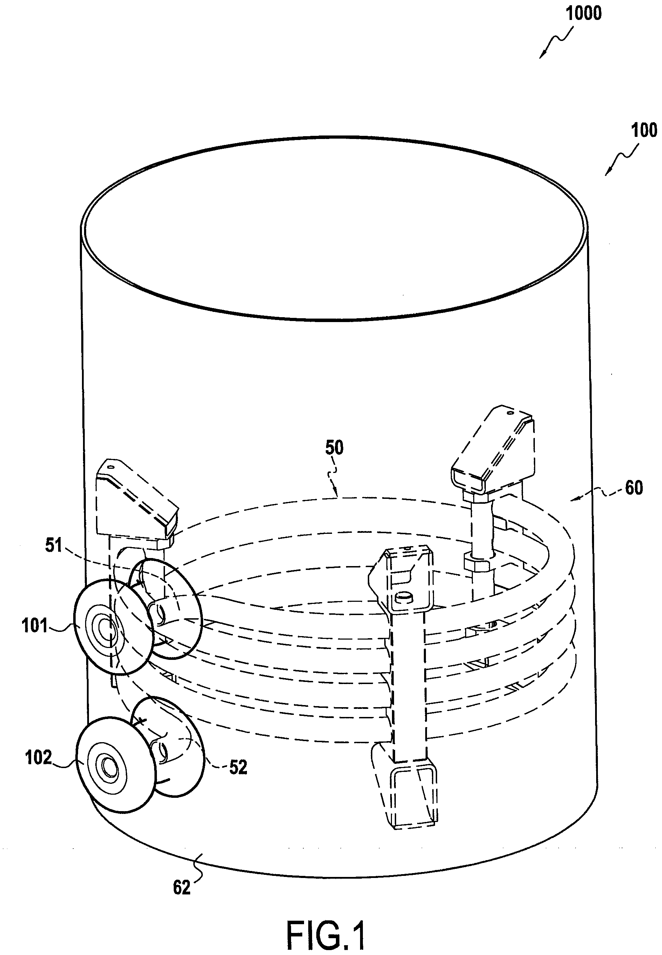

Le réchauffeur 100 représenté sur la figure 1 fait partie d'un moteur pour fusée 1000 dont seul le réchauffeur est représenté.

Le réchauffeur 100 comprend un serpentin 50, un tube cylindrique 60, et deux connecteurs 101 et 102 sensiblement identiques.

Le tube 60 est un tube dans lequel circulent les gaz d'échappement du moteur 1000, portés à haute température. Les connecteurs 101 et 102 servent à maintenir les extrémités du serpentin 50 en position fixe par rapport à la paroi du tube 60. Le serpentin est constitué par un tuyau formé en hélice avec quatre spires. Les extrémités du serpentin sont coudées en des coudes 51, 52 à angle droit, de manière à pouvoir passer à travers la paroi 62 du tube 60. Par l'intermédiaire des connecteurs 101 et 102, le serpentin 50 est connecté à deux parties amont et aval (non représentées) du circuit de distribution d'hydrogène.

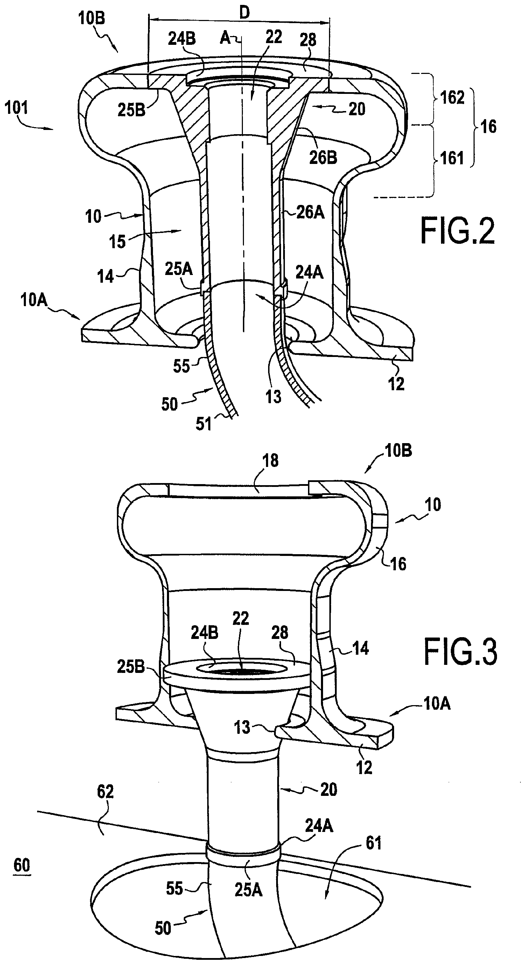

Lors du montage du réchauffeur 100, on place d'abord le serpentin dans le tube 60. Des ouvertures (dont l'ouverture 61 sur la figure 3) aménagées préalablement dans la paroi du tube 60 permettent le passage des extrémités du serpentin 50 : Une fois le serpentin placé dans le tube 60, on introduit ses extrémités dans les deux ouvertures percées dans la paroi 62.

Comme le serpentin ne doit pas perturber le passage des gaz dans le tube 60, le diamètre du serpentin est voisin de celui du tube 60, de telle sorte que les spires du serpentin se trouvent à proximité immédiate de la paroi du tube 60. Aussi, comme il y a un jeu ou une distance faible entre les spires du serpentin et la paroi intérieure du tube 60, il n'est pas possible de faire sortir les extrémités du serpentin par les ouvertures prévues dans la paroi 62 de plus de 8 à 12% environ du diamètre du tube 60 (soit 2 à 3 centimètres, le diamètre du tube 60 étant d'environ 25 centimètres).

Comme cela a été indiqué précédemment, en raison des dilatations et contractations thermiques qui affectent le serpentin 50, des accélérations et vibrations que subit le réchauffeur 100, il est nécessaire de maintenir fermement en position le serpentin 50 par rapport au tube 60. Il est nécessaire en particulier de solliciter mécaniquement aussi peu que possible les extrémités du serpentin 50, afin d'éviter tout risque de fissure au niveau du raccordement du serpentin avec les parties amont et aval du circuit de distribution d'hydrogène.

Dans ce but et selon l'invention, le raccordement du serpentin est réalisé au moyen de connecteurs tels que les connecteurs 101 et 102. Le connecteur 101 à titre d'exemple va être décrit en relation avec les figures 2 et 3.

Le connecteur 101 est formé par deux pièces fixées l'une à l'autre : un manchon 10 et un raccord 20 pour relier au moins une paire de tubes.

Le raccord 20 est de forme globalement tubulaire, avec une forme de révolution autour d'un axe A. Il présente un passage interne 22 s'étendant suivant l'axe A et reliant un premier et un deuxième orifice notés respectivement 24A et 24B. Ces orifices 24A et 24B sont aménagés avec des lamages permettant la fixation de tubes. Dans l'assemblage représenté sur la figure 2, une première extrémité 55 du tube constitué par le serpentin 50 est raccordée au premier orifice 24A.

Les orifices 24A et 24B sont aménagés aux extrémités 25A et 25B du raccord ; ce sont des orifices circulaires coaxiaux avec l'axe A du raccord. L'orifice 24A en particulier est prévu pour permettre la fixation de l'extrémité d'un tube suivant l'axe A, sur l'extrémité 25A du raccord.

Bien que dans certains modes de réalisation de l'invention, il puisse être symétrique par rapport à un plan perpendiculaire à son axe A, dans le mode de réalisation illustré le raccord 20 est asymétrique. Il est constitué en effet par la réunion de deux portions successives, qui sont dites portion cylindrique 26A et portion tronconique 26B en raison de leur forme générale extérieure. Le passage interne 22 pour sa part, est de diamètre constant. La forme tronconique de la portion 26B a pour effet d'accroître le diamètre extérieur du raccord par rapport à la portion cylindrique 26A, ce qui permet que la deuxième extrémité 25B du raccord soit mécaniquement renforcée par rapport à la première extrémité. L'extrémité 25B du raccord 20 comporte enfin une bride circulaire 28 sur laquelle le manchon 10 est fixé.

Le manchon 10 est formé en trois portions, à savoir un fût tubulaire 14, un soufflet 16, et une base 12. Ces trois portions sont formées intégralement. La base 12 constitue donc la première extrémité 10A du raccord ; inversement la partie du soufflet 16 qui est du côté opposé à la base 12 constitue la deuxième extrémité 10B du manchon.

La base 12 sert à la fixation du connecteur 101 sur la paroi 62.

Elle est constituée par un disque percé en son centre d'un trou circulaire 13. Ce disque a vocation à être fixé dans l'ouverture 61 aménagée dans la paroi 62 pour le passage de l'extrémité 55 du serpentin 50.

Le fût 14 et le soufflet 16 ont un rôle de liaison mécanique entre la base 12 et le raccord 20. Le fût 14 a une forme générale cylindrique et une épaisseur qui décroît progressivement de la base 12 au soufflet 16. Cette diminution (progressive) d'épaisseur permet d'aménager une partie de flexion 161, également de faible épaisseur, dans la partie du soufflet voisine du fût.

Par soufflet, on désigne une pièce à paroi mince qui s'étend autour d'un axe en ayant des dimensions transverses qui croissent puis décroissent.

Le soufflet 16 est ainsi constitué par la partie de flexion 161 citée précédemment, dont le diamètre est croissant du fût 14 vers l'extrémité 25B du raccord, et une partie de raccordement 162, de diamètre décroissant, qui relie la partie de flexion à la bride 28. Pour permettre La fixation, par soudage, du manchon 10 à la bride 28, la partie de raccordement présente un trou circulaire 18 coaxial avec l'axe du manchon, dont le diamètre D est sensiblement égal au diamètre externe de la bride 28.

La partie de flexion 161 présente une épaisseur relativement faible, et sa section présente un point d'inflexion (dans un plan de section longitudinal tel que celui de la figure 2). Pour ces raisons, le soufflet 16 et plus particulièrement sa partie de flexion présente une élasticité certaine qui permet grâce à la déformation du manchon 10 de réduire l'intensité des efforts transmis par la paroi 62 à l'extrémité du serpentin 50.

Le manchon 10 présente donc une partie de fort diamètre constituée par le soufflet 16, et une partie de moindre diamètre constituée par le fût 14. Le soufflet 16 et le fût 14 sont sensiblement adjacents axialement (suivant l'axe A) du manchon.

Le manchon 10 présente ainsi une forme de champignon.

Le changement de diamètre au niveau de la partie de flexion 161, qui est de faible épaisseur, confère au manchon 10 de se déformer élastiquement suivant l'axe A, ce qui évite que des contraintes trop importantes n'apparaissent notamment dans les soudures entre le serpentin (ou tube) 50 et le raccord 20.

### MONTAGE

Le montage du connecteur 101 se fait de la manière suivante.

Pour permettre le passage et le raccordement des deux extrémités du serpentin 50, la cloison est prévue avec deux grandes ouvertures (l'ouverture 61 apparaît sur la figure 3), dont le diamètre est sensiblement égal au diamètre extérieur de la base 12.

Les opérations de montage du connecteur 101 sur l'extrémité 55 du serpentin sont les suivantes.

Dans une étape initiale, on fait passer l'extrémité 55 du serpentin à travers la cloison 62, à travers l'ouverture 61.
a) On fournit alors les composants du connecteur 101, à savoir le manchon 10 et le raccord 20.
b) Par un premier déplacement, on place le raccord 20 de telle sorte que la première extrémité 25A du raccord dépasse à l'extérieur du manchon 10. Le raccord 20 est alors positionné par rapport au manchon 10 dans la position relative représentée sur la figure 3, dite 'première position'.

Cette mise en place se fait de la manière suivante : Le raccord 20 est introduit dans le manchon 10, non pas par le trou 13, qui est trop petit pour permettre le passage du raccord 20, mais par le trou 18, c'est-à-dire par la deuxième extrémité 10B du manchon 10. Cette opération est possible car le manchon 10 et le raccord 20 sont spécialement agencés pour que l'on puisse faire entrer le raccord 20 dans le manchon 10 par le trou 18, et le faire alors coulisser dans le manchon 10 jusqu'à ce qu'il occupe la première position, avec sa première extrémité 25A dépassant du manchon 10 par l'extrémité 10A en vue de la fixation du tube. Pour permettre ce déplacement du raccord 20 dans la manchon 10, il suffit en pratique que le profil extérieur du raccord 20 (qui apparaît sur la figure 2) soit à l'intérieur du profil intérieur du manchon 10 pour l'ensemble des positions relatives que doit occuper le raccord 20 par rapport au manchon 10, depuis la position initiale de présentation du raccord 20 à l'extérieur du manchon 10 au voisinage du trou 18, jusqu'à son positionnement en 'première position' par rapport au manchon 10 (Fig.3).

Dans cette première position, la première extrémité 25A du raccord dépasse du manchon 10, et permet ainsi la fixation solide et étanche de l'extrémité 55 du serpentin sur l'orifice 24A du raccord.
c) On fixe alors le tube au premier orifice. Cette opération est faite par soudage orbital à l'aide d'un robot de soudage.
d) Par un second déplacement, on place alors le raccord 20 par rapport au manchon 10 dans une deuxième position dans laquelle le premier orifice 24A du raccord se trouve à l'intérieur du manchon. Cette position est représentée sur la figure 2.
e) Le raccord étant dans cette deuxième position par rapport au manchon, on fixe le manchon 10 au raccord 20 à distance dudit premier orifice 24A. Cette opération consiste dans le mode de réalisation présenté à souder la bride 28 dans le trou 18.
f) Enfin, on fixe par soudage la base 12 sur la cloison 62.

On comprend qu'en choisissant de manière adéquate la longueur du raccord 20 (mesurée suivant l'axe A), on peut utiliser un manchon 10 d'une longueur adaptée au cahier des charges que celui-ci doit satisfaire.

L'utilisation d'un raccord allongé tel que le raccord 20 permet donc de remédier aux limitations induites par la faible longueur disponible du serpentin 50 en dehors de la paroi 60. Plus la longueur du manchon est grande, plus celui-ci peut comporter de soufflets. Le manchon peut par exemple comporter plusieurs soufflets, au lieu d'un seul soufflet comme le soufflet 16. Ces soufflets peuvent permettre d'accroître l'élasticité du manchon et donc, de limiter encore plus que le manchon 10 les forces transmises par la paroi 62 sur l'extrémité du serpentin 50. De manière générale, pour donner au manchon de l'élasticité, toute forme, notamment de révolution, présentant une section axiale non droite (par exemple en 'S', etc.), favorise la déformation axiale du manchon et accroît son élasticité.

On notera d'autre part que le connecteur 101 présenté est étanche. Cette étanchéité n'est cependant pas assurée au niveau de la cloison 62 (dans le plan de la base 12, c'est-à-dire au niveau du trou 13), mais par le connecteur 101 tout entier. Pour obtenir l'étanchéité du connecteur 101, l'extrémité 55 est soudée de manière étanche sur l'orifice 24A du raccord 20, la bride 28 est soudée de manière étanche dans le trou 18, et la base 12 est soudée de manière étanche sur la paroi 62.

En revanche, comme le trou 13 n'est pas étanche, la chambre 15 qui est formée à l'intérieur du manchon 10, autour du raccord 20 et du tube 55, se trouve reliée avec l'intérieur du tube 60 par un passage annulaire assez réduit, entourant le serpentin 50. Comme ce passage est réduit, les gaz présents dans la chambre 15 ne se renouvellent que lentement. Ils jouent donc un rôle d'amortisseur thermique, au niveau des connecteurs 101 et 102, entre les gaz circulant dans le tube 60 et l'hydrogène circulant dans le serpentin. En effet, les gaz contenus dans la chambre 15 adoptent une température intermédiaire entre la température de l'hydrogène circulant dans le serpentin 50, et celle des gaz d'échappement circulant dans le tube 60. Grâce à cela, la soudure formée à l'extrémité 55 du serpentin dans le connecteur 101 est protégée thermiquement contre les effets thermiques nocifs, qui se produiraient si la soudure était portée à la température élevée des gaz d'échappement du moteur 1000.

## Revendications

1. Kit de connexion (101,102) comportant un manchon (10), et un raccord (20) pour relier au moins une paire de tubes, dans lequel
le raccord (20) est de forme globalement tubulaire, et présente un axe (A), ainsi qu'un premier et un deuxième orifice (24A,24B) pour la fixation des deux tubes ;
le premier orifice (24A) est aménagé à une première extrémité (25A) du raccord et est orienté suivant l'axe de celui-ci ;
ladite première extrémité (25A) est configurée pour permettre de fixer de manière étanche un tube de ladite paire de tubes au premier orifice (24A) du raccord (20) ;
le raccord (20) est apte à coulisser de manière coaxiale au manchon (10), depuis une première position, dans laquelle la première extrémité (25A) du raccord (20) dépasse à l'extérieur d'une première extrémité (10A) du manchon (10) ;
jusqu'à une deuxième position qui permet la fixation du manchon (10) sur le raccord (20) ;
le kit de connexion **se caractérisant en ce que** la deuxième position permet la fixation du manchon (10) sur le raccord (20) à distance dudit premier orifice (24A), ladite distance étant supérieure à un diamètre d'un passage interne (22) du raccord (20).

2. Kit selon la revendication 1, dont le manchon (10) comporte une base (12) présentant une bride de fixation prévue pour la fixation du manchon sur un support.

3. Kit selon la revendication 2, dans lequel la base (12) bouche partiellement la première extrémité (10A) du manchon.

4. Kit selon la revendication 2 ou 3, dans lequel la base (12) est sensiblement plane et est orientée transversalement par rapport à l'axe (A) du manchon.

5. Kit selon l'une quelconque des revendications 2 à 4, dans lequel un trou (13) aménagé dans la base pour le passage d'un tube présente un diamètre légèrement supérieur à celui du passage interne (22) du raccord.

6. Kit selon l'une quelconque des revendications 2 à 5, dans lequel, lorsque le raccord (20) est placé en deuxième position, la bride de fixation se trouve au voisinage de la première extrémité (10A) du manchon (10).

7. Kit selon l'une quelconque des revendications 1 à 6, dans lequel le manchon présente une deuxième extrémité (10B) du côté opposé à la première extrémité (10A) ; et
parmi les deux extrémités du manchon, seule la deuxième extrémité (10B) permet l'introduction du raccord (20) dans le manchon (10) en vue de son positionnement dans la première position.

8. Kit selon l'une quelconque des revendications 1 à 7, dans lequel par rapport à un axe du raccord (20), lorsque le raccord (20) est placé en deuxième position, la première extrémité du raccord (25A) se trouve à l'intérieur du manchon.

9. Kit selon l'une quelconque des revendications 1 à 8, dans lequel le deuxième orifice (24B) du raccord (20) est situé à une deuxième extrémité (25B) du raccord (20), et celle-ci est configurée pour permettre de fixer de manière étanche un tube de ladite paire de tubes au deuxième orifice (24B) du raccord (20).

10. Procédé de fixation d'un tube (50) à un connecteur (101,102), comprenant les étapes suivantes :
a) on fournit un kit de connexion selon l'une quelconque des revendications 1 à 9,
b) on place le raccord (20) dans une première position dans laquelle la première extrémité (25A) du raccord (20) dépasse à l'extérieur du manchon (10) par une première extrémité (10A) de celui-ci ;
c) on fixe alors de manière étanche le premier tube au premier orifice (24A) du raccord (20) ;
d) on déplace le raccord par rapport au manchon dans une deuxième position, dans laquelle le premier orifice se trouve de préférence à l'intérieur du manchon ; et
e) le raccord étant dans la deuxième position, on fixe le manchon (10) au raccord (20) ;
le procédé **se caractérisant en ce qu'**à l'étape e), le raccord étant dans la deuxième position, on fixe le manchon (10) au raccord (20) à distance dudit premier orifice (24A), ladite distance étant supérieure à un diamètre d'un passage interne du raccord (20), le manchon (10) et le raccord (20) constituant conjointement un connecteur.

11. Procédé de fixation selon la revendication 10, dans lequel à l'étape c), l'extrémité (55) du premier tube est soudée au raccord, notamment par une soudure orbitale.

12. Procédé de fixation selon la revendication 10 ou 11, dans lequel à l'étape b), le raccord est introduit dans le manchon par une deuxième extrémité (10B) du manchon située du côté opposé à la première extrémité (10A) de celui-ci, puis placé dans ladite première position.

13. Procédé de fixation selon l'une quelconque des revendication 10 à 12, comprenant en outre une étape f) durant laquelle on fixe le manchon sur un support (60).

## Patentansprüche

1. Verbindungskit (101, 102), umfassend eine Muffe (10) und ein Verbindungselement (20), um wenigstens ein Paar von Rohren zu verbinden, wobei
das Verbindungselement (20) insgesamt rohrförmig ausgebildet ist und eine Achse (A) sowie eine erste und eine zweite Öffnung (24A, 24B) für die Befestigung der beiden Rohre aufweist,
die erste Öffnung (24A) an einem ersten Ende (25A) des Verbindungselements ausgebildet und entlang der Achse dessen ausgerichtet ist,
das erste Ende (25A) dazu ausgebildet ist, das dichte Befestigen eines Rohres des Paares von Rohren an der ersten Öffnung (24A) des Verbindungselements (20) zu ermöglichen,
das Verbindungselement (20) geeignet ist, von einer ersten Position, in der das erste Ende (25A) des Verbindungselements (20) außerhalb eines ersten Endes (10A) der Muffe (10) übersteht, bis in eine zweite Position, die das Befestigen der Muffe (10) an dem Verbindungselement (20) ermöglicht, koaxial zu der Muffe (10) zu gleiten,
**dadurch gekennzeichnet, dass** die zweite Position das Befestigen der Muffe (10) an dem Verbindungselement (20) im Abstand von der ersten Öffnung (24A) ermöglicht, wobei der Abstand größer als ein Durchmesser eines Innendurchgangs (22) des Verbindungselements (20) ist.

2. Kit nach Anspruch 1, dessen Muffe (10) eine Basis (12) aufweist, die einen Befestigungsflansch, welcher für die Befestigung der Muffe an einem Halter vorgesehen ist, aufweist.

3. Kit nach Anspruch 2, bei der die Basis (12) das erste Ende (10A) der Muffe teilweise abdeckt.

4. Kit nach Anspruch 2 oder 3, bei dem die Basis (12) im Wesentlichen eben ist und zu der Achse (A) der Muffe quer ausgerichtet ist.

5. Kit nach einem der Ansprüche 2 bis 4, bei dem ein Loch (13), das in der Basis für den Durchgang eines Rohres ausgebildet ist, einen Durchmesser aufweist, der geringfügig größer als der des Innendurchgangs (22) des Verbindungselements ist.

6. Kit nach einem der Ansprüche 2 bis 5, bei dem dann, wenn das Verbindungselement (20) in der zweiten Position angeordnet ist, der Befestigungsflansch sich in der Nähe des ersten Endes (10A) der Muffe (10) befindet.

7. Kit nach einem der Ansprüche 1 bis 6, bei dem die Muffe ein zweites Ende (10B) auf der zu dem ersten Ende (10A) entgegengesetzten Seite aufweist, und
unter den beiden Enden der Muffe lediglich das zweite Ende (10B) das Einführen des Verbindungselements (20) in die Muffe (10) im Hinblick auf dessen Positionieren in der ersten Position ermöglicht.

8. Kit nach einem der Ansprüche 1 bis 7, bei dem gegenüber einer Achse des Verbindungselements (20), wenn das Verbindungselement (20) in der zweiten Position angeordnet ist, das erste Ende des Verbindungselements (25A) sich innerhalb der Muffe befindet.

9. Kit nach einem der Ansprüche 1 bis 8, bei dem die zweite Öffnung (24B) des Verbindungselements (20) sich an einem zweiten Ende (25B) des Verbindungselements (20) befindet, und dieses Ende dazu ausgebildet ist, das dichte Befestigen eines Rohres des Paares von Rohren an der zweiten Öffnung (24B) des Verbindungselements (20) zu ermöglichen.

10. Verfahren zum Befestigen eines Rohres (50) an einem Verbinder (101, 102), das die folgenden Schritte umfasst:
a) Bereitstellen eines Verbindungskits nach einem der Ansprüche 1 bis 9,
b) Anordnen des Verbindungselements (20) in einer ersten Position, in der das erste Ende (25A) des Verbindungselements (20) außerhalb der Muffe (10) über ein erstes Ende (10A) derer übersteht,
c) anschließend dichtes Befestigen des ersten Rohres an der ersten Öffnung (24A) des Verbindungselements (20),
d) Bewegen des Verbindungselements gegenüber der Muffe in eine zweite Position, in der die erste Öffnung sich vorzugsweise innerhalb der Muffe befindet, und
e) während sich das Verbindungselement in der zweiten Position befindet, Befestigen der Muffe (10) an dem Verbindungselement (20),
das Verfahren **dadurch gekennzeichnet ist, dass** bei Schritt e), während sich das Verbindungselement in der zweiten Position befindet, die Muffe (10) am Verbindungselement (20) im Abstand von der ersten Öffnung (24A) befestigt wird, wobei der Abstand größer als ein Durchmesser eines Innendurchgangs des Verbindungselements (20) ist, und die Muffe (10) und das Verbindungselement (20) zusammen einen Verbinder bilden.

11. Befestigungsverfahren nach Anspruch 10, bei dem bei Schritt c) das Ende (55) des ersten Rohres an das Verbindungselement angeschweißt wird, insbesondere durch eine Rundnahtschweißung.

12. Befestigungsverfahren nach Anspruch 10 oder 11, bei dem bei Schritt b) das Verbindungselement über ein zweites Ende (10B) der Muffe, das auf der von deren ersten Ende (10B) entgegengesetzten Seite gelegen ist, in die Muffe eingeführt wird, anschließend in der ersten Position angeordnet wird.

13. Befestigungsverfahren nach einem der Ansprüche 10 bis 12, ferner umfassend einen Schritt f), während dessen die Muffe an einem Halter (60) befestigt wird.

## Claims

1. A connection kit (101, 102) comprising a sleeve (10) and a coupling (20) for connecting together at least one pair of tubes, wherein
the coupling (20) is generally tubular in shape, presenting an axis (A), together with first and second orifices (24A, 24B) for fastening the two tubes;
the first orifice (24A) is provided at a first end (25A) of the coupling and is oriented on its axis;
said first end (25A) is configured to enable one tube of said pair of tubes to be fastened in leaktight manner to the first orifice (24A) of the coupling (20);
the coupling (20) is suitable for sliding coaxially relative to the sleeve (10), from a first position in which the first end (25A) of the coupling (20) projects outside a first end (10A) of the sleeve (10);
to a second position that enables the sleeve (10) to be fastened to the coupling (20);
the connection kit being **characterized in that** the second position enables the sleeve (10) to be fastened to the coupling (20) at a distance from said first orifice (24A), said distance being greater than a diameter of an internal passage (22) of the coupling (20).

2. A kit according to claim 1, wherein the sleeve (10) includes a base (12) having a fastener flange for fastening the sleeve to a support.

3. A kit according to claim 2, wherein the base (12) partially closes the first end (10A) of the sleeve.

4. A kit according to claim 2 or claim 3, wherein the base (12) is substantially plane and oriented transversely relative to the axis (A) of the sleeve.

5. A kit according to any one of claims 2 to 4, wherein a hole (13) provided in the base for passing a tube presents a diameter that is slightly greater than the diameter of the internal passage (22) of the coupling.

6. A kit according to any one of claims 2 to 5, wherein, when the coupling (20) is placed in the second position, the fastener flange is in the vicinity of the first end (10A) of the sleeve (10).

7. A kit according to any one of claims 1 to 6, wherein the sleeve presents a second end (10B) at a side opposite from the first end (10A); and
among the two ends of the sleeve, only the second end (10B) enables the coupling (10) to be inserted into the sleeve (10) in order to be positioned in the first position.

8. A kit according to any one of claims 1 to 7, wherein, relative to an axis of the coupling (20), when the coupling (20) is placed in the second position, the first end (25A) of the coupling is inside the sleeve.

9. A kit according to any one of claims 1 to 8, wherein the second orifice (24B) of the coupling (20) is situated at a second end (25B) of the coupling (20), and the second end of the coupling is configured to enable a tube of said pair of tubes to be fastened in leaktight manner to the second orifice (24B) of the coupling (20).

10. A fastening method for fastening a tube (50) to a connector (101, 102), the method comprising the following steps:
a) providing a connection kit according to any one of claims 1 to 9;
b) placing the coupling (20) in a first position in which the first end (25A) of the coupling (20) projects outside the sleeve (10) through a first end (10A) thereof;
c) then fastening the first tube in leaktight manner to the first orifice (24A) of the coupling (20);
d) moving the coupling relative to the sleeve into a second position in which the first orifice preferably lies inside the sleeve; and
e) with the coupling in the second position, fastening the sleeve (10) to the coupling (20);
the fastening method being **characterized by** at step e), with the coupling in the second position, fastening the sleeve (10) to the coupling (20) at a distance from said first orifice (24A), said distance being greater than a diameter of an internal passage of the coupling (20), the sleeve (10) and the coupling (20) together constituting a connector.

11. A fastening method according to claim 10, wherein, in step c), the end (55) of the first tube is welded to the coupling, in particular by orbital welding.

12. A fastening method according to claim 10 or claim 11, wherein, in step b), the coupling is inserted into the sleeve via a second end (10B) of the sleeve situated at a side opposite from its first end (10A), and is then placed in said first position.

13. A fastening method according to any one of claims 10 to 12, further including a step f) in which the sleeve is fastened to a support (60).
